# EUROPEAN PATENT APPLICATION

(11) **EP 2 674 828 A1**
(43) Date of publication of application: **18.12.2013**
(21) Application number: 13397513.6
(22) Date of filing: 06.05.2013
(51) Int. Cl.: G05G 1/04, G05G 1/02, G05G 9/047, H01H 23/30, H01H 25/04, H01H 25/00, H01H 23/14

(54) **Control switch for use in a working machine**

(30) Priority: 14.06.2012 FI 20125660
(71) Applicant: John Deere Forestry Oy, 33100 Tampere (FI)
(72) Inventor: Paakkinen, Marko, 33230 Tampere (FI); Tainio, Mikko, 33300 Tampere (FI)
(74) Representative: Tampereen Patenttitoimisto Oy

(57) **Abstract**

A control switch (30) to be used in a working machine, the control switch comprising a switch arranged to be in a position which can be selected from at least two positions, and a selection button (36) which is arranged to be in a state which can be selected from two states. The switch of the control switch (30) is of a rocker switch (34) type, the selection button (36) is integrated in the control switch (30), and the selection button (36) is arranged to be used in combination with or independently of the rocker switch (34), wherein the control switch (30) can be used for giving at least four different control signals. A control unit comprising said control switch and a stick-like control lever. A working machine (11) comprising said control switch (30) or said control unit.

## Description

### Field of the invention

The invention relates to control devices. In particular, the invention relates to control devices for vehicles. The invention relates particularly to control devices for working machines, such as forest machines.

### Background of the invention

Vehicles, such as working machines, are controlled by control devices. In this description, a working machine refers to devices which are configured to be movable, such as earth moving machines, stump pullers, tractors, tractor excavators, excavator loaders, mini loaders, wheel loaders, and forest machines, which are not only movable but also configured to perform other functions controlled by the driver. Such functions are described, among other things, by the above-mentioned designations of the working machines.

A steering wheel is known as a control device for vehicles. The steering wheel may also comprise integrated buttons for controlling other devices of the vehicle, such as a vehicle radio. For example, a steering wheel with a row of three integrated buttons is known. The uppermost button and the lowermost button can be used, for example, for increasing and decreasing the sound volume of the vehicle radio, respectively. The middle button can be used, for example, for switching the channel of the vehicle radio.

In particular, the control of working machines is a complex process. The working machine may comprise a plurality of controllable parts, such as a boom assembly or a traverser, or implements, such as a grapple. Consequently, there are several controllable degrees of freedom. If the different parts of a boom assembly and a grapple of the above described kind are controlled by buttons according to the state of art, the number of buttons will easily become high. Furthermore, the feedback feeling of the buttons is not always convenient for the driver.

### Brief summary of the invention

In this description, a control switch will be presented, by means of which the above described problems can be reduced. The feedback feeling of the control switch is good. In an embodiment, the control switch is configured to be used in a working machine. The control switch comprises a switch configured to be in a position which can be selected from at least two positions, and a selection button configured to be in a state which can be selected from two states. Said switch of the control switch is of a rocker switch type. The selection button is integrated in the control switch. The selection button is configured to be used in combination with or separately from the rocker switch, wherein a single switch can be applied for giving a greater number of different control signals than buttons of the state of art.

In an embodiment of the invention, the selection button is integrated in the rocker switch. In an embodiment of the invention, the selection button is provided on the surface of the rocker switch. In an embodiment of the invention, the rocker switch is configured to turn in two different directions with respect to its normal position. In an embodiment of the invention, the control switch is incorporated in another control device, such as a stick-like control lever. In an embodiment of the invention, the control switch is provided in a working machine, such as a forest machine, for example in a stick-like control lever in the working machine. In an embodiment of the invention, the working machine is configured to implement a function when the control switch is applied. These and other advantageous embodiments are described in the dependent claims 2 to 12.

### Description of the drawings

In the following, the invention will be described in more detail with reference to the appended drawings, in which:
- Fig. 1: shows a forest machine,
- Fig. 2: shows control devices used for controlling the forest machine of Fig. 1, seen from above,
- Fig. 3: shows a four-state discrete control switch seen from the side,
- Figs. 4a to 4d: show the control switch of Fig. 3 in four different states, seen from the side,
- Fig. 5: shows a six-state discrete control switch in a perspective view,
- Figs. 6a to 6f: show the control switch of Fig. 5 in six different states, seen from the side,
- Fig. 7: shows the dimensions of the control switch of Fig. 5, and
- Fig. 8: shows a stick-like control device comprising a control switch.

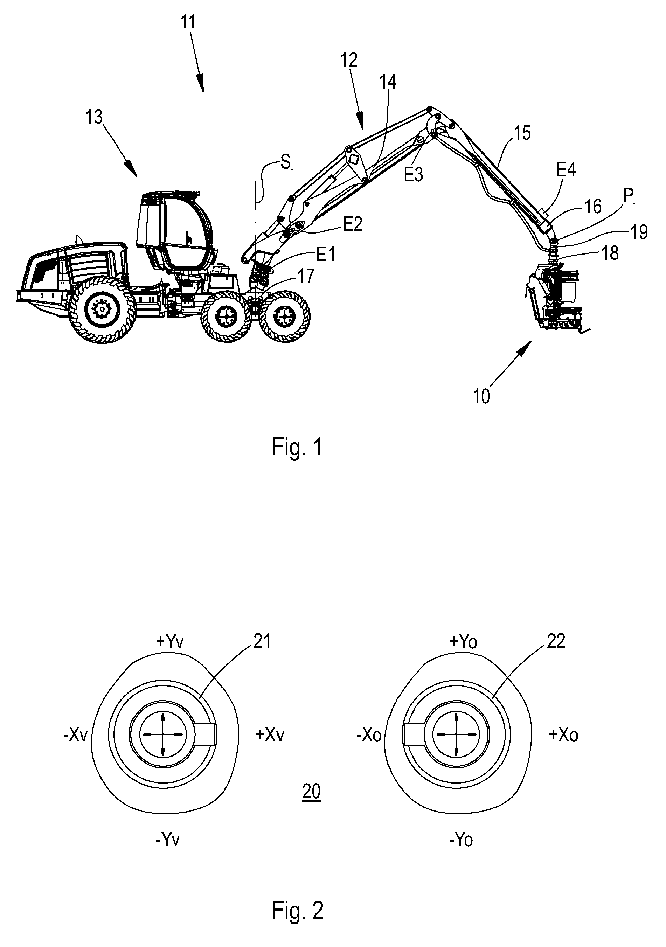

In Figs. 1 to 8, corresponding numerals or symbols refer to corresponding parts.

### Detailed description of the invention

Figure 1 shows a working machine 11. The working machine 11 comprises a base machine 13. The working machine 11 further comprises a traverser 17 and a boom assembly 12 mounted on the traverser 17. The boom assembly 12 comprises booms, for example a hoist boom 14, a stick boom 15, and an extension boom 16. A rotating device 18, *i.e.* a rotator, is provided at the end Pr of the boom assembly 12. A tilting device 19, *i.e.* a tilter, is provided at the end Pᵣ of the boom assembly 12. An implement 10 is connected to the rotator 18. At least one of the following is configured to be controlled: the base machine 13, the boom assembly, the traverser 17, the rotator 18, the tilter 19, and the implement 10. The working machine 11 of Fig. 1 is of the forest machine type, more precisely a harvester, for felling, delimbing and crosscutting trees in a forest to logs of suitable length. In the working machine shown in the figure, the implement 10 is a harvester head. The harvester can be used for implementing the harvesting steps from felling to stacking. Another commonly used forest machine is a forwarder (not shown in the figure), which refers to a forest machine designed for transporting timber. Harvesters are also known which can be used for harvesting timber in a forest as well as for transporting the timber away from the forest. Such a harvester can also be called a combined machine, because it combines properties of a harvester and a forwarder.

The control devices of the control system of the forest machine 11 are shown in Fig. 2. The control system of the forest machine 11 comprises control devices 20 which are connected to a control unit (not shown) in the forest machine in such a way that the control functions generated by the control devices can be used for controlling at least one of the following: the working machine 11, the base machine 13, the traverser 17,the boom assembly 12, the boom (14, 15 and 16), the rotator 18, the tilter 19, and the implement 10. By controlling, the respective part of the machine is made to move in a desired way and/or to take desired measures. The boom assembly 12 is equipped with suitable measuring sensors E1, E2, E3, and E4 so that the orientation of the boom assembly 12 with respect to the base machine 13, the positions (angles) of the booms 14 and 15 to each other, the position of the extension boom 16 with respect to the stick boom 15, as well as the position of the head Pᵣ of the boom assembly 12 with respect to its rotation axis Sᵣ can be determined continuously. The slewing axis of the traverser 17 is indicated with the symbol Sᵣ. The slewing axis of the boom assembly is the same as the slewing axis of the traverser 17.

The control devices 20 used for controlling the forest machine 11 shown in Fig. 1, or a part of it (12, 13, 14, 15, 16, 17, 18, 19, 10), are seen from above in Fig. 2. In this case, they are two joystick-type control levers: control lever 21 and control lever 22. The joystick-type control lever has a stick-like shape and is mounted in a swivelling manner on its base, for example a control panel. When the stick-like control lever is swivelled with respect to its base, all the surfaces of the control lever are turned in the same way with respect to the base. The angles of the control lever with respect to its base can be changed by swivelling the control lever. The rotational angles of the control lever in both x and y directions are used as control signals. The control signal can have, for example, three positions in a first direction (x-direction, see Fig. 2): "left", "middle" and "right". Advantageously, the control signal in the x-direction receives several values, corresponding to the rotation angle of the control switch in the x-direction. The control signal can have, for example, three positions in a second direction (y-direction, see Fig. 2): "forward", "middle" and "back". Advantageously, the control signal in the y-direction receives several values, corresponding to the rotation angle of the control switch in the y-direction.

Figure 2 shows a control lever 21 to be operated by the left hand and a control lever 22 to be operated by the right hand. For example, the left-hand control lever 21, according to Fig. 2, may generate the following control functions:
+Yv = movement of the head Pᵣ of the boom assembly in the horizontal direction, away from the base machine,
-Yv = movement of the head Pᵣ of the boom assembly in the horizontal direction, towards the base machine,
+Xv = swivelling of the head Pᵣ of the boom assembly clockwise in the horizontal direction, and
-Xv = swivelling of the head Pᵣ of the boom assembly counterclockwise in the horizontal direction.

For example, the right-hand control lever 22, according to Fig. 2, may generate the following control functions:
+Xo = movement of the head Pᵣ of the boom assembly upwards in the vertical direction, and
-Xo = movement of the head Pᵣ of the boom assembly downwards in the vertical direction.

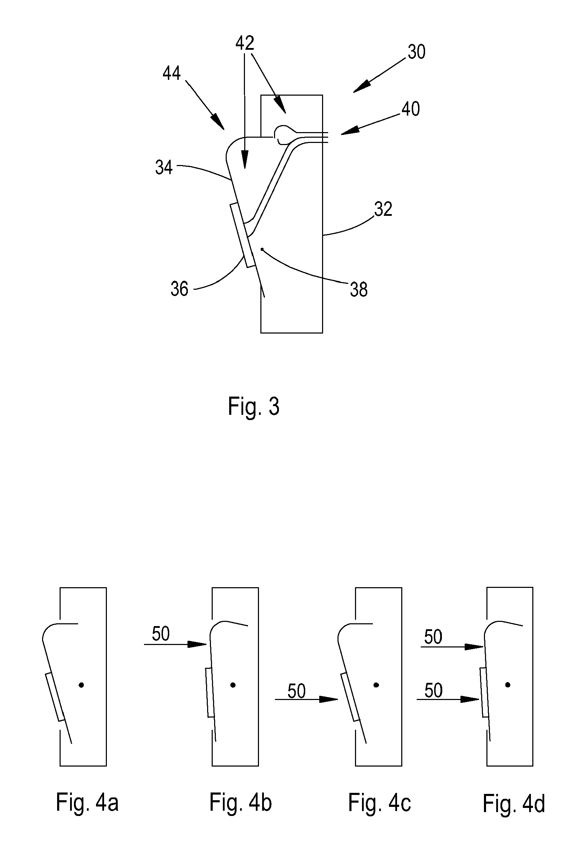

Figure 3 shows a control switch 30 according to an embodiment of the invention. The control switch 30 may be integrated, for example, in a stick-like control lever 21 or 22. The control switch 30 may be integrated, for example, in the handle of such a control lever (that is, in the handle of a control device of the so-called joystick type). The control switch 30 may be mounted on or integrated in a control device of a different type.

The control switch 30 comprises a frame 32. The control switch 30 further comprises a switch. The switch is of the rocker switch 34 type. In this context, the rocker switch refers to a switch comprising a part supported at some point to the frame, the angle of the part being configured to be changeable with respect to the frame. In Fig. 3, the rocker switch 34 is provided in the frame 32 of the control switch 30, on a first surface of the control switch 30, on the left hand side of the control switch 30 in Fig. 3. Particularly that part of the rocker switch 34, the angle of which part in relation to the frame is configured to be changeable, is provided on said first surface of the control switch 30. The angle of the part of the rocker switch 34 is configured in such a way that said angle is changeable, even though another surface of the frame 32, the second surface opposite to the first side (on the right in Fig. 3) remains stationary. Thus, the control switch 30 comprises the rocker switch 34 on its first surface. The rocker switch 34 comprises a part supported to the frame 32, the angle of the part being configured to be changeable with respect to the opposite second surface of the control switch. Thus, furthermore, the angle of said part supported to the frame 32 is arranged to be changeable with respect to the first surface of the frame 32 of the control switch. Said first surface of the frame of the control switch extends to said first surface of the control switch; in other words, said surfaces are joined to each other. For example, the left surface of the frame 32 in Fig. 3 extends to the surface of the rocker switch 34, the surface of the rocker switch forming a part of the surface of the control switch. The rocker switch 34 can also be provided on the first surface of a control device of a different type. Also in such a case, the angle of said part supported to the frame 32 is arranged to be changeable with respect to the first surface of the frame of the control switch. In its feedback feeling, such a rocker switch 34 differs significantly from the above described control switch whose all swivelling surfaces are always oriented in the same way with respect to each other.

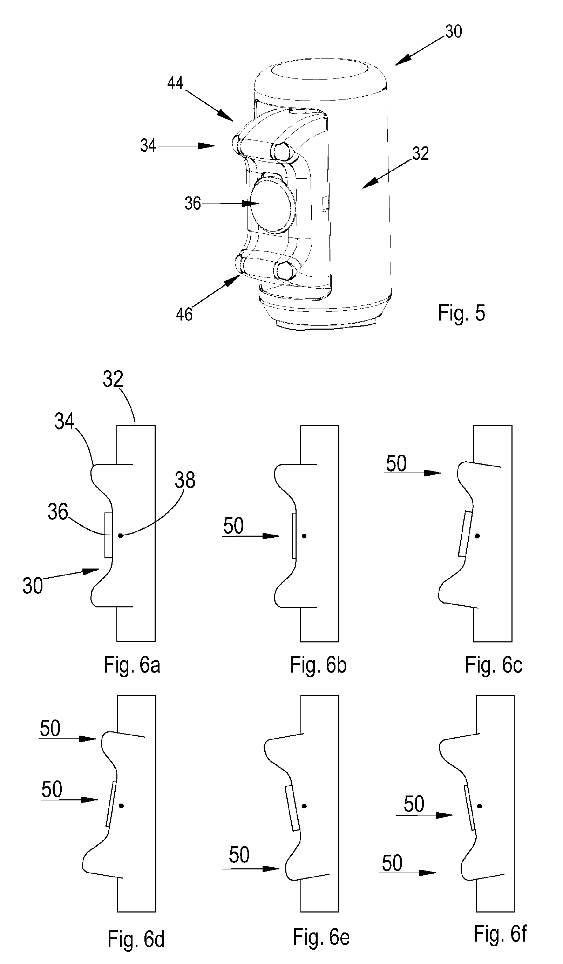

The rocker switch 34 is configured to be in a position that can be selected from at least two positions. The rocker switch 34 can have a discrete position, wherein the position of the rocker switch 34 can be selected from a countable set of various positions, for example two positions in Fig. 3 (e.g. "neutral" and "pressed") and three positions in Fig. 5 (e.g. "middle", "up" and "down"). The rocker switch 34 may have continuous positions, wherein the position of the rocker switch 34 can be selected from a set comprising an infinite number of different positions: two extreme positions and all the continuous stages between these extreme positions. Furthermore, it is obvious that the rocker switch 34 may have several positions, wherein the position of the rocker switch 34 can be selected from a set comprising two extreme positions and several stages between these extreme positions. For example, countably several positions or continuously several positions.

In Fig. 3, the rocker switch 34 has two positions, wherein the rocker switch 34 is configured to be in a position which can be selected from two positions. The position refers to the position of the rocker switch 34, for example its angle, with respect to the frame 32. For example, the rocker switch 34 may be in its first position when the rocker switch 34 is not pressed down. The rocker switch 34 is in its second position when the rocker switch 34 is pressed close to its first edge 44 with a sufficient force. The first edge 44 may be, for example, the upper edge of the rocker switch 34. The rocker switch 34 is pressed close to its first edge, for example, when it is pressed in an area left between said first edge 44 and the centre part of the rocker switch. The control switch 30 may comprise an axis 38, on which the rocker switch 34 is configured to be swivelled with respect to the frame 32. The rocker switch 34 is pressed close to its first edge, for example, when it is pressed in an area left between said first edge 44 and the swivelling axis 38.

As a switch, the rocker switch 34 is a user friendly solution compared with press buttons, because the user will easily recognize the position of the rocker switch 34 with his/her hand, irrespective of the clothing of the hand. In recognizing the position of the rocker switch, the user may utilize, for example, a feeling obtained by several fingers, which differs from the feeling obtained from a single button. Also, for example thick gloves may make it difficult to use press buttons, particularly if there are several press buttons.

A control switch 30 comprising a rocker switch 34 arranged to be in a position that can be selected from a set comprising a finite number of positions, is called a discrete control switch. In a corresponding manner, a control switch 30 comprising a rocker switch 34 arranged to be in a position that can be selected from a set comprising an infinite number of positions, is called a continuous control switch. Consequently, the above presented control switch was a discrete one.

In a continuous control switch, the position of the rocker switch may be continuous. For example, the angle of the rocker switch in relation to the frame of the control switch 30 may cause the rocker switch to generate a control signal. Such a control signal may be continuous, for example continuously increasing or decreasing, when the angle of the rocker switch 34 is increased or decreased with respect to the frame 32, respectively. Even in this case, the rocker switch 34 is configured to be in a position that can be selected from several positions.

Advantageously, the control switch 30 comprises a first return member (not shown in the figure), such as a spring that is arranged to return the rocker switch 34 to said first position when the rocker switch 34 is not pressed. Advantageously, the control switch 30 comprises a first return member, such as a spring, which is arranged to return the rocker switch 34 to said first position when the rocker switch 34 is not pressed close to the first edge 44. In a control switch 30 with two positions, returning the rocker switch 34 from the second position to the first position may be difficult without a return member. In a rocker switch with two positions, the positions may be, for example, "neutral" and "pressed", corresponding to the first and second positions, respectively.

The control switch 30 further comprises a selection button 36. The selection button 36 is integrated in the control switch 30, wherein the selection button is easy to use together with or separately from the rocker switch 34. Advantageously, the selection button 36 is integrated in the control switch 34, wherein the selection button may be even easier to use together with or separately from the rocker switch 34. The selection button 36 is configured to be in a state which state can be selected from two states. Said two states may be, for example, "not selected" and "selected". When no force is exerted on the selection button 36, the selection button is in its first state, for example in the state "not selected". By pressing the selection button with a sufficient force, a selection can be made. Thus, the state of the selection button changes to the second state, for example to the state "selected". Advantageously, the control switch 30 comprises a second return member, such as a spring, which is arranged to return the selection button 36 to said first position when the selection button 36 is not pressed. The selection button may be, for example, a mechanical or electric switch.

In Fig. 3, the selection button 36 is arranged on the surface of the rocker switch 34. The selection button 36 may also be integrated in another point in the control switch 30. For example in the case of Fig. 3, the selection button 36 could be integrated in the upper part of the control switch 30, for example on top of it. Thus, the selection button 36 could be applied, for example, with the thumb, and the rocker switch 34 could be applied with at least one other finger. Advantageously, the selection button 36 is integrated in the rocker switch, wherein the selection button 36 and the rocker switch 34 can be applied with the same finger or fingers.

The control switch 30 of Fig. 3 comprises an axis 38, on which the rocker switch 34 is configured to swivel with respect to the frame 32 of the control switch 30. The axis may be located close to the second end of the rocker switch 34. The axis 38 may be located, for example, at such a distance from the first edge of the rocker switch that part of the selection button 36 is also located at the same distance. Thus, pressing of the selection button 36 does not necessarily cause swivelling of the rocker switch 34.

The control switch 30 of Fig. 3 further comprises at least one electric contact 40. By means of the electric contact, the control switch 30 is configured to transmit data on the position of the rocker switch 34 and the state of the selection button 36. Data can also be transmitted to, for example, the control system. In Fig. 3, the control switch 30 further comprises electric wires 42, by means of which data on the position of the rocker switch 34 and the state of the selection button 36 can be transmitted to the electric contact 40. Data on the position of the rocker switch 34 and the state of the selection button 36 can be transmitted, for example, in the form of a control signal. The control signal may receive one or several discrete or continuous values. For example, in the case of Fig. 3, the control signal may receive four different discrete values. Such a control signal can be transmitted, for example, by means of two electric contacts in such a way that the resistance between the contacts represents the control signal. Such a control signal can be transmitted, for example, by means of three electric contacts in such a way that one contact acts as the common ground, and the resistances of the other two contacts with respect to this common ground are either very high (open circuit) or very low (closed circuit). In other embodiments, the control signal can be transmitted, for example, optically, capacitively or by radio transmission, wherein electric contacts are not necessarily needed. However, the control switch 30 comprises means, for example at least one of the above described means, for transmitting a control signal.

According to Fig. 3, the selection button 36 is advantageously provided on the surface of the rocker switch 34. In this context, the surface of the rocker switch refers to the surface opposite to the frame 32 of the control switch 30, or the surface elevated from the frame 32, *i.e*. the surface whose angle is configured to be changeable with respect to the rest of the frame in the above described way. Thus, it is possible to apply the control switch 30 by one hand. More precisely, both the position of the rocker switch 34 and the state of the selection button 36 can be selected in combination or separately simultaneously by using only one hand. For example, the force 50 shown in each Fig. 4b, 4c, 6b, 6c, and 6e can be exerted by using one hand. In a corresponding manner, the forces 50 shown in Figs. 4d, 6d and 6f can be exerted simultaneously by using one hand.

With a discrete control switch equipped with a rocker switch having two positions, it is possible to achieve four different control states. Said control states can be achieved by using one hand. In an embodiment, said control states can be achieved by using one finger.

With reference to Table 1 and Figs. 4a to 4d, four different control signals can be achieved with the control switch 30.

**Table 1: Dependence of control signal on the position of the rocker switch with two positions and the state of the selection button in the presented discrete control switch.**

| Rocker switch 34 | Selection button 36 | Control signal | Figure |
|---|---|---|---|
| Neutral | Not selected | 1 or (0,0) | 4a |
| Pressed | Not selected | 2 or (0,1) | 4b |
| Neutral | Selected | 3 or (1,0) | 4c |
| Pressed | Selected | 4 or (1,1) | 4d |

A control signal, for example control signal 1, can be interpreted in the control system as a situation in which the device is not actively controlled. In Figs. 4a to 4d, arrows 50 show forces exerted on the rocker switch 34 and/or the selection button 36 for generating a control signal. As stated above, the control signal can be represented, for example, by one resistance, which resistance may receive four values (Table 1). The four different values are illustrated with the numerals 1, 2, 3, and 4; the real values of the resistance may vary, for example, between approximately zero (conducting) and approximately infinite (open circuit). As stated above, the control signal can be represented, for example, by two resistances, which resistances may each receive two values. In Table 1, these are illustrated with the ordered pairs of numbers (0,0); (0,1); (1,0); (1,1). Obviously, the numerals 0 and 1 do not refer to the numerical values of the resistance. The real values of the resistance may vary, for example, between approximately zero (conducting) and approximately infinite (open circuit).

As also presented above, the position of the rocker switch may be continuously changing. Furthermore, this position can be represented by, for example, one resistance, which resistance may receive values between a lower extreme value and a higher extreme value, including the extreme values. For example, the lowest extreme value may be approximately 0, corresponding to a conducting electric contact. The highest extreme value may be, for example, M. For example, the highest extreme value may be infinite, corresponding to an open circuit.

Correspondingly, the state of the selection button may receive two values. Furthermore, this state can be represented by, for example, one resistance, which resistance may receive two values: one lower extreme value and another higher extreme value. For example, one of the two lowest extreme values may be approximately 0, corresponding to a conducting electric contact. For example, one of the two highest extreme values may be infinite, corresponding to an open circuit.

Table 2 shows control signals of the control switch corresponding to Fig. 3 when the rocker switch 34 has continuous positions. In Table 2, the control signals generated by the selection button 36 are given as the numeral 0 or 1. The signal of the rocker switch with continuous positions is given in the form of 0, x or M.

**Table 2: Dependence of the control signal on the position of the rocker switch and the state of the selection button in the presented continuous control switch.**

| Rocker switch 34 | Selection button 36 | Control signal | Figure |
|---|---|---|---|
| Neutral | Not selected | (0,0) | 4a |
| Neutral | Selected | (0,1) | 4c |
| Partly pressed | Not selected | (x,0); 0<x<M | Not shown |
| Partly pressed | Selected | (x,1); 0<x<M | Not shown |
| Pressed | Not selected | (M,0) | 4b |
| Pressed | Selected | (M,1) | 4d |

Figure 5 shows an advantageous embodiment of the control switch 30. The control switch 30 comprises a frame 32. The control switch 30 also comprises a rocker switch 34. The control switch 30 further comprises a selection button 36. In this embodiment, the rocker switch 34 has three positions. Thus, the rocker switch 34 is configured to be in a position that can be selected from three positions. For example, the rocker switch 34 may be in its first position when the rocker switch 34 is not pressed down. The rocker switch 34 is in its second position when the rocker switch 34 is pressed close to its first edge 44 with a sufficient force. The first edge 44 may be, for example, the upper edge of the rocker switch 34. The rocker switch 34 is in its third position when the rocker switch 34 is pressed close to its second edge 46 with a sufficient force. The second edge 46 may be, for example, the lower edge of the rocker switch 34.

By applying a control switch 30 equipped with a rocker switch 34 having three positions, it is possible to generate six different control signals instead of four control signals. This reduces further the number of buttons needed.

When the rocker switch 34 is configured to swivel in two different directions with respect to its neutral position, the feedback feeling is even better. Thus, pressing the first edge 44 of the rocker switch will cause the second edge 46 to rise (and *vice versa),* which movement is easily felt by the driver of the machine with his/her hand. The rocker switch 34 is configured to turn to two different positions with respect to its neutral position, for example when the axis 38 of the rocker switch 34 is configured substantially in the middle part of the rocker switch, as shown in Figs. 6a to 6f. References include, for example, Figs. 4a to 4d, in which the axis 38 is provided close to the edge of the rocker switch. The axis 38 of the rocker switch 34, in turn, is configured substantially in the middle part of the rocker switch, when the distance of the axis 38 from the first and second edges of the rocker switch 34 is at least one third of the dimension of the rocker switch. Thus, the distance of the axis 38 from the second and first edges of the rocker switch 34 (respectively) is not greater than two thirds of the dimension of the rocker switch. Alternatively or in addition, if the rocker switch comprises a first return member, the neutral position may refer to the position to which the rocker switch returns when no force is exerted on it. Advantageously, the rocker switch 34 is configured to swivel in two different directions with respect to its neutral position, for example with respect to its neutral position mentioned above. Consequently, said neutral position may be the above-mentioned first position of the rocker switch.

Advantageously, the control switch 30 comprises a first return member, such as a spring or springs, which is (are) arranged to return the rocker switch 34 to said first position when the rocker switch 34 is not pressed at either edge. In this way, the rocker switch is prevented from remaining in its second or third position which might represent active control. For example, one of the springs may be provided close to the first edge 44 of the rocker switch 34, and the other one may be provided close to the second edge 46 of the rocker switch 34.

In the embodiment of Fig. 5, the selection button 36 is arranged on the surface of the rocker switch 34. Furthermore, the selection button 36 is advantageously arranged in the middle part of the rocker switch 34. In this context, the surface of the rocker switch refers to the surface opposite to the frame 32 of the control switch 30, or the surface elevated from the frame 32, *i.e.* the surface whose angle is arranged to be changeable with respect to the rest of the frame in the above described way. Thus, it is easy to apply the control switch 30 by one hand. With such a control switch, it is possible to achieve six different control states. Said control states can be achieved by using one hand. In an embodiment, said control states can be achieved by using one finger.

Also, in the case of Fig. 5, the selection button 36 could be integrated in the upper part of the control switch 30, for example on top of it. Thus, the selection button 36 could be applied, for example, with the thumb, and the rocker switch 34 could be applied with at least one other finger. Advantageously, the selection button 36 is integrated in the rocker switch, for example on its surface in the above described way, wherein the selection button 36 and the rocker switch 34 can be applied with the same finger or fingers.

Said six control signals can be generated by any of the following ways:
- allowing the rocker switch 34 to set in its first position, and not making a selection with the selection button 36,
- setting the rocker switch 34 in the second or third position without simultaneously making a selection with the selection button 36,
- setting the rocker switch 34 in the first, second or third position by simultaneously making a selection with the selection button 36.

Said positions of the rocker switch 34 may be, for example, "middle", "up" and "down", corresponding to the first, second and third positions, respectively. Said states of the selection button 36 may be, for example, "not selected" and "selected", corresponding to the first and second states of the selection button 36. The control signals are presented in Table 3 and illustrated in Figs. 6a to 6f. Figures 6a to 6f also include arrows 50 showing the forces exerted on the rocker switch 34 and/or the selection button 36 for generating a control signal.

**Table 3: Dependence of control signal on the position of the rocker switch with three positions and the state of the selection button in the presented discrete control switch.**

| Rocker switch 34 | Selection button 36 | Control signal | Figure |
|---|---|---|---|
| Middle | Not selected | 1 or (0,0,0) | 6a |
| Middle | Selected | 2 or (0,0,1) | 6b |
| Up | Not selected | 3 or (1,0,0) | 6c |
| Up | Selected | 4 or (1,0,1) | 6d |
| Down | Not selected | 5 or (0,1,0) | 6e |
| Down | Selected | 6 or (0,1,1) | 6f |

With reference to Figs. 6a to 6f, forces (arrows 50) can be exerted on the rocker switch 34 and/or the selection button 36 by one hand, for example in such a way that the middle finger is used to operate the selection button 36 and the forefinger and the ring finger are used to operate the rocker switch 34. It is also possible to operate the control switch 30 by one finger, for example in such a way that
- the control signal 2 (Table 3) is generated by pressing the centre of the selection button 36,
- the control signal 3 (Table 3) is generated by pressing the upper part of the rocker switch 34,
- the control signal 4 (Table 3) is generated by pressing the upper part of the selection button 36,
- the control signal 5 (Table 3) is generated by pressing the lower part of the rocker switch 34,
- the control signal 6 (Table 3) is generated by pressing the lower part of the selection button 36, and
- the control signal 1 (Table 3) is generated by releasing both the rocker switch 34 and the selection button 36.

In a case where the buttons of the control switch are not pressed down (Fig. 6a, control signal 1), the control switch does not necessarily transmit a control signal. Thus, the control switch can be used for generating at least five different control signals. These five can correspond to the situation of Figs. 6b to 6f.

The position of such a rocker switch turning in two different directions may also be continuous in the above described way. The rocker switch 34 turning in two different directions is configured to swivel in two different directions with respect to its neutral position in the above described way. The control signal obtained from such a switch can be represented by, for example, two resistances, the first one being continuous and the second one being discrete in the above described way. In said neutral position, said resistance may be, for example, N, where N is between said lower and said higher extreme values. Table 4 illustrates the control signals in the case of a continuous control switch 30, where the rocker switch can be swivelled in two directions.

**Table 4: Dependence of the control signal on the position of the rocker switch and the state of the selection button in the presented continuous control switch comprising a rocker switch configured to be swivelled in two directions with respect to its neutral position.**

| Rocker switch 34 | Selection button 36 | Control signal | Figure |
|---|---|---|---|
| Middle | Not selected | (N,0) | 6a |
| Middle | Selected | (N,1) | 6b |
| Partly up | Not selected | (x,0); N<x<M | Not shown |
| Partly up | Selected | (x,1); N<x<M | Not shown |
| Up | Not selected | (M,0) | 6c |
| Up | Selected | (M,1) | 6d |
| Partly down | Not selected | (x,0); 0<x<N | Not shown |
| Partly down | Selected | (x,1); 0<x<N | Not shown |
| Down | Not selected | (0,0) | 6e |
| Down | Selected | (0,1) | 6f |

In Table 4, the turn "partly up" refers to a situation in which the rocker switch has been partly pressed on the side that corresponds to the direction up, but not to its extreme position. In a corresponding manner, the turn "partly down" refers to a situation in which the rocker switch has been partly pressed on the side that corresponds to the direction down, but not to its extreme position.

The different control signals can be used in different ways. When the control switch is not applied; that is, it is not pressed at all, wherein it may have been returned to its neutral position in the above described way, a control signal is obtained (the uppermost case in Tables 1 to 4). If such a control signal continues for a long time, it usually refers to a situation where the active operation by the driver has been stopped or interrupted. Such a signal can be used, for example, in such a way that after said signal has been continued for a longer time than a threshold time, some devices can be automatically turned off. Other signals which typically require active operations by the user, such as active pressing of the rocker switch 34 or the selection button 36, may be used in varying ways in the control of the working machine 11 or its devices (12, 13, 14, 15, 16, 17, 18, 19, 10; Fig. 1)

A threshold time can be set for other control signals as well, and the control function can be started, for example, first after the control signal has lasted for a longer time. The threshold time can be used, for example, to prevent error situations. For example, when generating a control signal according to Fig. 6f by applying both the rocker switch 34 and the selection button 36, a control signal according to Fig. 6b or 6e may be momentarily generated, in which only one of said switches is applied, depending on the order in which the rocker switch 34 and the selection button 36 are applied. By means of the threshold time, such momentary signals can be filtered out.

Hereinabove, embodiments with a resistive control signal have been described. In some embodiments, the control signal is represented by two or three resistances. More generally, the control signal may comprise one or more of the following signals:
- resistance. As described in more detail above.
- voltage. The control switch 30 may comprise means for receiving energy (for example an electric wire for an external or internal power source, such as a battery or an accumulator). The selection button and/or the rocker switch can be applied to change the voltage obtained from the control switch. The voltage can be supplied to, for example, an electric contact 40 (Fig. 3).
- voltage. The control switch 30 may comprise piezoelectric material. Pressing the selection button and/or the rocker switch will cause a deformation which generates a voltage. The voltage can be supplied to, for example, an electric contact 40 (Fig. 3).
- current. The control switch 30 may comprise means for receiving energy (for example an electric wire for an external or internal power source, such as a battery or an accumulator). The selection button and/or the rocker switch can be applied to change the current obtained from the control switch. The current can be supplied to, for example, an electric contact 40 (Fig. 3).
- capacitance. The selection button and/or the rocker switch comprises a capacitive sensor whose capacitance is configured to change when said sensor is pressed or touched. The control signal can also be capacitive, in which case the capacitive structure may be completely inside the control switch and the electric contact 40 is not necessarily needed. Thus, the control switch comprises at least one coated electric wire for forming a capacitive coupling.
- inductance. The selection button and/or the rocker switch comprises an inductive sensor whose inductance is configured to change when said sensor is pressed or touched. The control signal can also be inductive, in which case the inductive structure may be completely inside the control switch and the electric contact 40 is not necessarily needed. The control signal can also be transmitted inductively by varying the inductance generated by the control switch. Thus, the control switch may comprise a coil or an antenna for transmitting the signal. The control switch 30 may comprise means for receiving energy. The means may comprise, for example, an electric wire for an external power source or an internal power source, such as a battery or an accumulator. The means may comprise, for example, a coil or an antenna for supplying the current inductively.
- an optical signal. The control switch 30 may comprise means for generating and transmitting an optical signal. Such means may comprise a light source, such as a light emitting diode or a laser, for example a semiconductor laser. The selection button and/or the rocker switch may be used to generate an optical signal. The control switch 30 may comprise means for receiving energy. The means may comprise, for example, an electric wire for an external power source or an internal power source, such as a battery or an accumulator. The means may comprise, for example, a coil or an antenna for supplying the current inductively.
- an RF signal. The control switch 30 may comprise means for receiving energy. The means may comprise, for example, an electric wire for an external power source or an internal power source, such as a battery or an accumulator. The means may comprise, for example, a coil or an antenna for supplying the current inductively. The control switch 30 may comprise means for generating and transmitting a radio frequency signal. Such means comprise at least an antenna and may comprise an integrated circuit. The selection button and/or the rocker switch may be used to generate the radio frequency (RF) signal.

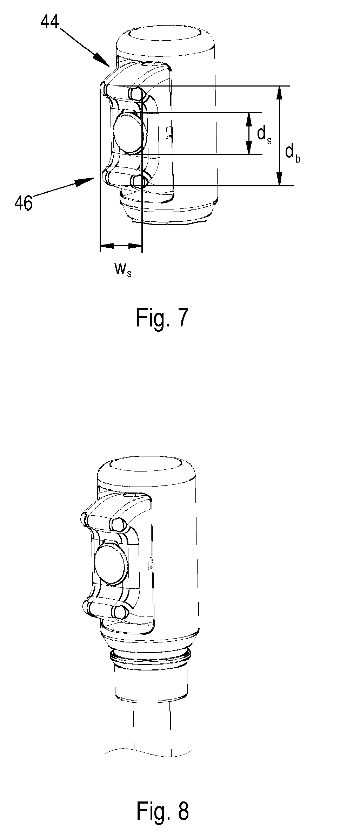

Figure 7 illustrates some dimensions of the control switch. When the control switch 30 is configured to be operated by one hand, the distance d_{b} between the first edge 44 and the second edge 46 of the rocker switch is between 2 cm and 15 cm, advantageously between 4 cm and 10 cm, and preferably between 5 and 7 cm. In Fig. 5, the size dₛ of the selection button 36 is smaller than that of the rocker switch. The size dₛ of the selection button may be, for example, approximately one third of said dimension d_{b} of the rocker switch. The size dₛ of the selection button may be, for example, approximately three fifths of said dimension d_{b} of the rocker switch. For example, the dimension dₛ of the selection button may be between 1 cm and 10 cm, advantageously between 2 cm and 6 cm.

The dimensions of the rocker switch 34 can be determined in such a way that said dimension d_{b} can be determined as the height of the rocker switch. Correspondingly, the dimension wₛ transverse to this direction is the width of the rocker switch 34. The width wₛ of the rocker switch may be, for example, between 0.5 cm and 20 cm, advantageously between 1 cm and 5 cm, and preferably about 3 cm.

Defined in the same way, the above-mentioned dimension of the selection button is the height of the selection button. The width of the selection button may be, for example, the same as the width of the rocker switch. Alternatively, the width of the selection button may be smaller than the width of the rocker switch. For instance, the width of the selection button may be, for example, between 0.5 cm and 20 cm, advantageously between 1 cm and 5 cm, and preferably about 3 cm.

Figure 8 shows a stick-like control device which is equipped with a control switch 30 according to an embodiment. The stick-like control device is movably mounted on its base. The angle of the stick to the base may be, for example, substantially constant, but the mounting point of the stick on the base is configured to be variable. The driver may move such a stick. Alternatively or in addition, the angle of the stick to the base may be configured to be changeable. Also this kind of a stick-like control device is movably mounted on its base.

The stick-like control device may be, for example, the above described control device of joystick type. Thus, in addition to the two angle variables given by a conventional joystick control device, it is possible to give, for example, five different control signals in the above described way. Such a control device comprises a control switch 30 and also a stick-like control lever which is mounted on its base in a swivelling manner. In the control device, the control switch 30 is incorporated in the stick-like control lever.

The stick-like control device of Fig. 8 may be provided in a working machine. The stick-like control device of Fig. 8 may be provided in, for example, a working machine 11 of Fig. 1. For example, stick-like control devices of Fig. 2 may comprise a control switch 30 according to an embodiment of Fig. 8. The working machine 11 may comprise a control switch 30. The working machine 11 may comprise the above described stick-like control device comprising a control switch 30. In an embodiment, the working machine 11 comprises two stick-like control levers comprising a control switch 30.

For example, the control switch 30 shown in Figs. 5 to 8 can be used for controlling the following functions of a harvester:
- Selection of log length. By pressing the selection button 36 and the rocker switch 34 up (Fig. 6d), the next log length can be selected. By pressing the selection button and the rocker switch down (Fig. 6f), the preceding log length can be selected.
- Saw of the harvester head. The saw of the harvester head can be started by pressing the selection button 36 (Fig. 6b).
- The main saw. The main saw of the harvester can be started by pressing the selection button and the rocker switch down (Fig. 6f).
- Upper saw. The upper saw of the harvester can be started by pressing the selection button and the rocker switch up (Fig. 6d).
- Harvester steering. By pressing the selection button, the harvester, particularly the frame of the harvester, can be steered by the rocker switch during driving.
- Processing of several tree trunks by using different control signals.
- The boom angle (tilt). By pressing the selection button, the angle of the harvester head of the harvester to the boom (the tilter 18, Fig. 1) can be controlled by the rocker switch.
- Manual feeding of a trunk at the harvester head. The rocker switch can be applied to close the harvester head, wherein the harvester head holds an unfelled tree. The selection button can be applied to move the grapple slowly along the trunk, for example towards the butt end of the trunk, and in this way to select a suitable felling point.

In the above described way, the control signals can be associated with a threshold time in the control system, for example so that performing a function requires that the control signal continues at least for the threshold time.

For example, the control switch 30 shown in Figs. 5 to 8 can be applied for controlling the following functions of a forwarder:
- grapple saw. Pressing the selection button will start the grapple saw.
- angle of the grapple. By pressing the selection button, the up and down positions of the rocker switch (Figs. 6d and 6f) can be used to turn the position of the grapple.
- angle of the boom. By pressing the selection button, the up and down positions of the rocker switch (Figs. 6d and 6f) can be used to turn the position of the boom.
- Recording the load. By pressing the selection button, the mass of the load in the grapple can be recorded.
- Turning the cabin in relation to the frame of the forwarder. By pressing the selection button, the up and down positions of the rocker switch (Figs. 6d and 6f) can be used to turn the position of the cabin.
- Steering the forwarder. By pressing the selection button, the rocker switch can be used to steer the forwarder, particularly the frame of the forwarder, during driving.

Advantageously, the control devices of the working machine (Fig. 2) comprise two stick-like control devices, each equipped with a control switch 30 according to an embodiment of the invention, as shown in Fig. 8. The stick-like control devices are the left control device and the right control device.

The control switch of the stick-like right control device can be applied for example in a forwarder, e.g. in the following way for the following functions:
- closing the grapple: rocker switch 34 up (Fig. 6c).
- opening the grapple: rocker switch 34 down (Fig. 6e).
- starting the grapple saw: selection button (Fig. 6b). The saw can be started, for example, when the selection button is pressed for at least a threshold time. For example, for at least 200 ms.
- raising the angle of the grapple: selection button and rocker switch up (Fig. 6d).
- lowering the angle of the grapple: selection button and rocker switch down (Fig. 6f).
- increasing the angle of the boom: selection button and tilting the whole right stick-like control device forward.
- decreasing the angle of the boom: selection button and tilting the whole right stick-like control device backward.

The control switch of the stick-like left control device can be applied, for example in a forwarder, e.g. in the following way for the following functions:
- extending the boom, for example by means of an extension boom 16: rocker switch 34 up (Fig. 6c).
- making the boom shorter, for example by means of the extension boom 16: rocker switch 34 down (Fig. 6e).
- recording the load: selection button (Fig. 6b).
- turning the cabin forward: selection button and rocker switch up (Fig. 6d).
- turning the cabin backward: selection button and rocker switch down (Fig. 6f).
- increasing the angle of the boom: selection button and tilting the whole right stick-like control device forward.
- decreasing the angle of the boom: selection button and tilting the whole right stick-like control device backward.

It is obvious that only examples on the application of the control switch 30 have been presented above, and not an extensive list on possible functions. It is obvious that only examples on the application of the control switch 30 in connection with the stick-like control device have been presented above, and not an extensive list on possible functions. As obvious from the examples, the working machine can be controlled in a versatile manner by the presented control switch 30. Furthermore, by using the stick-like control device in which the presented control switch 30 is integrated, it is possible to give a considerably large set of different control signals. For example, the six (or five in Figs. 6b to 6f) different signals of the control switch shown in Figs. 6a to 6f can be combined with the two items of angle data received from the stick. Consequently, even with one such stick-like control device, the number of control signals to be formed becomes large. With two control devices, the number of different signals can be increased further.

In addition to the stick-like control device, the presented control switch 30 equipped with a rocker switch 34 can also be integrated in another control device of a working machine. For example in working machines, various control panels can be used, which comprise various keys and/or a touch screen. The presented control switch can also be connected to such a keyboard or touch screen. As an alternative to a control panel, the control device of the working machine may also have a different shape. Such a control device for the working machine may be an integral part of the working machine, or the control device can be configured to be separate from the working machine but connected to the working machine in a wired or wireless manner. A wired connection refers to a connection formed by an electric wire between the control device and the working machine. A wireless connection refers to a connection with or without a medium, such as an optical, acoustic or radio frequency connection between the control device and the working machine. In many cases, however, the feedback feeling of a stick-like control device is better than the feedback feeling obtained from a control panel. Furthermore, the presented control switch can be easily integrated in a stick-like control device, and the usability of such a combination in the control of a working machine is good.

In Figs. 1 to 8, the reference numerals refer to the following features:

| | |
|---|---|
| 10 | Implement |
| 11 | Working machine |
| 12 | Boom assembly |
| 13 | Base machine |
| 14 | Hoist boom |
| 15 | Stick boom |
| 16 | Extension boom |
| 17 | Traverser |
| 18 | Rotating device or rotator |
| 19 | Tilting device or tilter |
| E1 | Measuring sensor |
| E2 | Measuring sensor |
| E3 | Measuring sensor |
| Sᵣ | Rotation axis of the traverser |
| Pᵣ | Head of the boom assembly |
| 20 | Control devices |
| 21 | Control lever to be operated by the left hand |
| 22 | Control lever to be operated by the right hand |
| +Xv | A first direction of the lever 21 |
| -Xv | The direction opposite to the first direction of the lever 21 |
| +Yv | A direction transverse to the first direction of the lever 21 |
| -Yv | The direction opposite to the direction "+Yv" of the lever 21 |
| +Xo | A first direction of the lever 22 |
| -Xo | The direction opposite to the first direction of the lever 22 |
| +Yo | A direction transverse to the first direction of the lever 22 |
| -Yo | The direction opposite to the direction "+Yo" of the lever 22 |
| 30 | Control switch |
| 32 | Frame of the control switch |
| 34 | Rocker switch |
| 36 | Selection button |
| 38 | Axis |
| 40 | Electrical contact |
| 42 | Electric wire |
| 44 | First edge of the rocker switch |
| 46 | Second edge of the rocker switch |
| 50 | Force |
| d_{b} | distance between the first and second edges of the rocker switch, *i.e.* the height of the rocker switch |
| dₛ | The dimension of the selection button, *i.e.* the height of the selection button |
| wₛ | The width of the rocker switch |

## Claims

1. A control switch (30) to be used in a working machine, the control switch comprising
- a switch configured to be in a position that can be selected from at least two positions, and
- a selection button (36) configured to be in a state that can be selected from two states,
**characterized in that**
- the switch is of a rocker switch (34) type,
- the selection button (36) is integrated in the control switch (30), and
- the selection button (36) is configured to be applied together with or separately from the rocker switch (34), wherein the control switch (30) can be used to give at least four different control signals.

2. The control switch (30) according to claim 1, **characterized in that**
- the rocker switch (34) is configured to be in a position that can be selected from at least three positions, wherein the control switch (30) can be used to give at least five different control signals.

3. The control switch (30) according to claim 1 or 2, **characterized in that**
- the rocker switch (34) is configured to be in a position that can be selected from a set comprising a first extreme position and a second extreme position and several positions between said extreme positions.

4. The control switch (30) according to any of the claims 1 to 3, **characterized in that**
- the selection button (36) is a mechanical or electrical switch, and
- the selection button (36) is provided on the surface of the rocker switch (34).

5. The control switch (30) according to any of the claims 1 to 4, **characterized in that**
- the selection button (36) is provided on the surface of the rocker switch (34), and further
- the selection button (36) is provided in the middle part of the rocker switch (34).

6. The control switch (30) according to any of the claims 1 to 5, **characterized in that** the control switch comprises
- a return member configured to return the rocker switch (34) to its normal position when the rocker switch (34) is not pressed.

7. The control switch (30) according to claim 6, **characterized in that**
- the rocker switch (34) is configured turnable in two different directions with respect to its normal position.

8. The control switch (30) according to any of the claims 1 to 7, **characterized in that** it comprises means for transmitting a control signal.

9. A control device, **characterized in that** it comprises
- a control switch (30) according to any of the claims 1 to 8, and
- a stick-like control lever (21, 22) which is movably mounted on its base, and in which control device
- the control switch (30) is connected to the stick-like control lever (21, 22).

10. A working machine (11), **characterized in that** it comprises
- a control switch (30) according to any of the claims 1 to 8, or
- a control device according to claim 9.

11. A working machine (11), **characterized in that** it comprises
- at least two control devices according to claim 9.

12. A working machine (11) according to claim 10 or 11, **characterized in that**
- the working machine (11) is selected from a set of forest machines comprising a harvester, a forwarder, and a combined machine,
- when the control switch (30) is applied, the working machine is configured to execute at least one of the following functions:
- closing of the grapple,
- opening of the grapple,
- starting of the grapple saw,
- raising of the angle of the grapple,
- lowering of the angle of the grapple,
- extension of the boom,
- making the boom shorter,
- recording of the load,
- turning of the cabin forward, and
- turning of the cabin backward.
